# EUROPÄISCHE PATENTSCHRIFT

(11) **EP 1 242 791 B1**
(45) Veröffentlichungstag und Bekanntmachung des Hinweises auf die Patenterteilung: **14.09.2005**
(21) Anmeldenummer: 00993639.4
(22) Anmeldetag: 27.12.2000
(51) Int. Cl.: G01F 1/075

(54) **MAGNETKUPPLUNG FÜR WASSERZÄHLER**
MAGNETIC COUPLING FOR WATER METER
COUPLEUR MAGNETIQUE POUR COMPTEUR D'EAU

(30) Priorität: 23.12.1999 DE 19962333
(43) Veröffentlichungstag der Anmeldung: 25.09.2002
(73) Patentinhaber: Minol International GmbH & Co. KG, 70186 Stuttgart (DE)
(72) Erfinder: LEHMANN, Werner, 70771 Leinfelden-Echterdingen (DE)
(74) Vertreter: Langöhrig, Angelika Beate
(86) Internationale Anmeldenummer: PCT/EP2000/013279
(87) Internationale Veröffentlichungsnummer: WO 2001/048445

(56) Entgegenhaltungen:
- EP-A- 0 512 325
- DE-U- 29 806 191
- US-A- 5 854 429

## Beschreibung

Die Erfindung betrifft eine Magnetkupplung für Durchflussmessgeräte, insbesondere Wasserzähler o.dgl., mit einem ersten und einem zweiten Magneten, die drehbar gelagert und durch eine Trennwand von einander getrennt sind, die auf einer Seite von durchfließendem Fluid umströmt ist.

Derartige Magnetkupplungen sind bspw. aus der CH 426 290 und der DE 197 23 364 A1 bekannt.

Die CH 426 290 offenbart einen Wasserzähler mit einem Messwerk und einem Zählwerk. Der bekannte Wasserzähler hat ein Gehäuse, in das ein Becher von oben her abdichtend eingesetzt ist. Der Boden des Bechers bildet zugleich die Trennwand zwischen dem Messwerk und dem Zählwerk. Die Antriebsübertragung durch die Trennwand erfolgt durch zwei Magnete, die beidseitig der Trennwand angeordnet sind. Zur Abschirmung der Magneten dient ein in das Gehäuse eingesetztes Gefäß mit einem haubenförmigen Deckel. Das Gefäß zur Abschirmung ist im Betrieb des Wasserzählers von Wasser umströmt. Deshalb ist das Gefäß zum Schutz vor Korrosion allseitig mit Kunststoff umkleidet.

Die DE 197 23 364 A1 beschreibt eine Magnetkupplung für Wasserzähler. Zwischen einem Messteil und einem Zählwerk sind zwei Ringmagnete angeordnet. Der eine Ringmagnet ist unter einem gestuften Deckel des Messteils angeordnet. Der andere Ringmagnet ist über einer in gleicher Weise gestuft ausgebildeten Bodenwand des Zählwerks gelagert. Zur Abschirmung ist u.a. ein Magnetschutzring um die beiden Ringmagneten herum angeordnet. Der Magnetschutzring ist außerhalb der in dem Deckel des Messteils und in der Bodenwand des Zählwerks ausgebildeten Stufen angeordnet.

Die bekannten Lösungen zur Abschirmung der Magnetkupplung haben den Nachteil, dass relativ viele Einzelteile benötigt werden.

Aufgabe der Erfindung ist es, eine Abschirmung für eine Magnetkupplung bereitzustellen, die wenig Einzelteile aufweist und einfach zu montieren ist.

Die Aufgabe ist bei einer Magnetkupplung für Durchflussmessgeräte, insbesondere Wasserzähler o.dgl., mit einem ersten und einem zweiten Magneten, die drehbar gelagert und durch eine einzige Trennwand voneinander getrennt sind, die auf einer Seite von durchfließendem Fluid umströmt ist, dadurch gelöst, dass die Trennwand von einer Druckplatte einteilig gebildet ist, die auf der einen Seite eine erste Ausnehmung mit einer ersten Lagerstelle für den ersten Magneten und auf der anderen Seite eine zweite Ausnehmung mit einer zweiten Lagerstelle für den zweiten Magneten aufweist, und dass auf der nicht von Fluid umströmten Seite in der Druckplatte eine Tasche ausgebildet ist, welche die erste und die zweite Ausnehmung zumindest in dem Bereich zur Aufnahme der Magneten umgibt und welche zur Aufnahme eines Abschirmelements dient. Durch die erfindungsgemäße Druckplatte wird eine einteilige Trennwand zwischen den beiden Magneten geschaffen. Die Tasche in der Druckplatte ermöglicht ein einfaches, auch nachträgliches Einsetzen und Auswechseln eines Abschirmelements. Das in die Tasche eingesetzte Abschirmelement ist nicht von Fluid umströmt und braucht daher nicht mit Kunststoff ummantelt zu sein.

Eine besondere Ausführungsart der Erfindung ist dadurch gekennzeichnet, dass es sich bei den Magneten um Ringmagneten handelt, die in komplementären Ausnehmungen in der Druckplatte aufgenommen sind, und dass das Abschirmelement von einem hohlzylinderförmigen Rohrstück gebildet wird, das in einer komplementären Tasche aufgenommen ist, die konzentrisch zu den beiden Ausnehmungen in der Druckplatte angeordnet ist. Das liefert den Vorteil geringer Herstellkosten für das Abschirmelement. Die besondere Anordnung der Ringabschirmung macht den Einsatz von herkömmlichen Rückschlussscheiben überflüssig.

Eine weitere besondere Ausführungsart der Erfindung ist dadurch gekennzeichnet, dass das Abschirmelement aus einem Metall mit einem hohen Eisenanteil gebildet ist. Der hohe Eisenanteil führt zu einer guten Abschirmwirkung. Allerdings wäre ein derart hoher Eisenanteil bei einem von Fluid umströmten Abschirmelement unter lebensmitteltechnischen Gesichtspunkten nicht realisierbar. Die Erfindung liefert den Vorteil, dass unabhängig vom durchströmenden Medium beliebige Materialien verwendet werden können.

Eine weitere besondere Ausführugnsart der Erfindung ist dadurch gekennzeichnet, dass die Druckplatte aus einem insbesondere glasfaserverstärkten Kunststoffmaterial gebildet ist. Dadurch wird eine besonders leichte und trotzdem stabile Lösung bereitgestellt. Die Druckplatte kann aber auch aus metallischen Werkstoffen, wie Messing, gebildet sein.

Die oben angebene Aufgabe ist bei einem Wasserzähler mit einem Gehäuse, in dem eine erste Messeinrichtung, insbesondere ein Flügelrad, aufgenommen ist, die mit einer Zähl- und/oder Anzeigeeinrichtung zusammenwirkt, dadurch gelöst, dass die Messeinrichtung durch eine vorab beschriebene Magnetkupplung mit der Zähl- und/oder Anzeigeeinrichtung gekoppelt ist. Die Erfindung wirkt sich besonders vorteilhaft bei sogenannten Aufputzwasserzählern aus, die durch Magnete leicht von außen zu beeinflussen sind. Dennoch eignet sich die Erfindung durchaus auch für die Anwendung in sogenannten Unterputzwasserzählern. Bei Unterputzwasserzählern kann die vorab beschriebene Druckplatte in einen Messeinsatz integriert sein, der austauschbar in einem Unterputzgehäuse aufgenommen ist.

Weitere Vorteile, Merkmale und Einzelheiten der Erfindung ergeben sich aus der nachfolgenden Beschreibung, in der unter Bezugnahme auf die Zeichnung ein Ausführungsbeispiel der Erfindung im Einzelnen beschrieben ist.
- Figur 1: einen vergrößerten Ausschnitt einer erfindungsgemäßen Druckplatte im Schnitt und
- Figur 2: ein Abschirmelement zur Verwendung mit der in Figur 1 dargestellten Druckplatte.

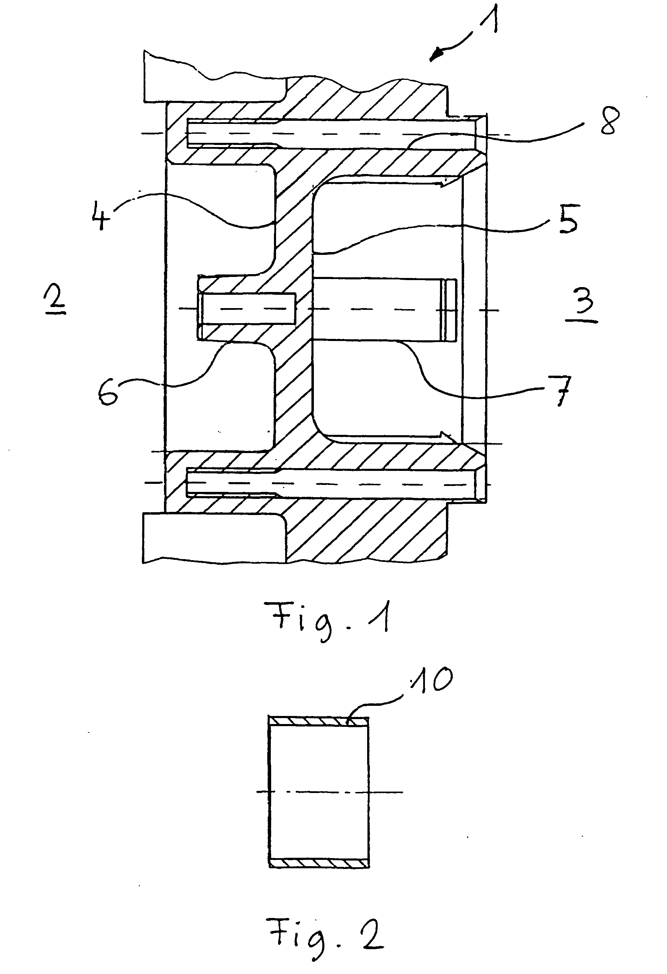

In Figur 1 ist ein vergrößerter Ausschnitt einer erfindungsgemäßen Druckplatte geschnitten dargestellt. Die Druckplatte gehört zu einem (nicht dargestellten) Gehäuse eines Wasserzählers. Die Druckplatte 1 hat im Wesentlichen die Form einer runden Scheibe mit zwei Seiten 2 und 3. Auf der Seite 2 der Druckplatte 1 ist eine Messeinrichtung in Form eines Flügelrades vorgesehen. Deshalb wird die Seite 2 der Druckplatte 1 auch als Messseite bezeichnet. Die Messseite 2 der Druckplatte 1 ist im Betrieb von Fluid umströmt. Auf der Seite 3 der Druckplatte 1 ist eine Zähl- und Anzeigeeinrichtung vorgesehen. Deshalb wird die Seite 3 der Druckplatte 1 auch als Anzeigeseite bezeichnet. Die Anzeigeseite 3 der Druckplatte 1 ist nicht von Fluid umströmt.

Im Betrieb des erfindungsgemäßen Wasserzählers wird das Flügelrad durch das durchströmende Wasser in Drehung versetzt. Die Drehung des Flügelrads wird auf einen ersten Magneten übertragen, der mit dem Flügelrad gekoppelt und in einer ersten Ausnehmung 4 auf der Messseite 2 der Druckplatte 1 drehbar gelagert ist. Im Zentrum der ersten Ausnehmung 4 auf der Messseite 2 der Druckplatte 1 ist eine Zentrier- und Lagereinrichtung 6 für den ersten Magneten vorgesehen.

Der ersten Magnet wirkt mit einem zweiten Magneten zusammen, der in einer zweiten Ausnehmung 5 auf der Anzeigeseite 3 der Druckplatte 1 drehbar gelagert ist. Die beiden Magnete in den Ausnehmungen 4 und 5 bilden eine Magnetkupplung, durch die die Drehung des Flügelrades auf der Messseite 2 auf die Zähl- und Anzeigeeinrichtung auf der Anzeigeseite 3 übertragen wird. Auf der Anzeigeseite 3 ist im Zentrum der zweiten Ausnehmung 5 in der Druckplatte 1 eine Zentrier- und Lagereinrichtung 7 ausgebildet.

Konzentrisch zu den beiden Ausnehmungen 4 und 5 ist radial außen eine Tasche 8 in der Druckplatte 1 ausgebildet. Die Tasche 8 hat die Gestalt eines Hohlzylinders, der die beiden Ausnehmungen 4 und 5 ausgehend von der Anzeigeseite 3 fast vollständig umgibt. Die Tasche 8 dient zur Aufnahme einer ebenfalls hohlzylindrischen Magnetabschirmhülse 10, die im Längsschnitt in Figur 2 dargestellt ist. Die Magnetabschirmhülse 10 kann nachträglich von außen in die Tasche 8 in der Druckplatte 1 eingesetzt werden. Die Magnetabschirmhülse 10 stößt in den Bereich der Ausnehmung 5 vor und deckt somit beide Magneten seitlich ab.

## Patentansprüche

1. Magnetkupplung für Durchflussmessgeräte, insbesondere Wasserzähler o.dgl., mit einem ersten und einem zweiten Magneten, die drehbar gelagert und durch eine einzige Trennwand (1) voneinander getrennt sind, die auf einer Seite (2) von durchfließendem Fluid umströmt ist, wobei die Trennwand von einer Druckplatte (1) einteilig gebildet ist, die auf der einen Seite (2) eine erste Ausnehmung (4) mit einer ersten Lagerstelle (6) für den ersten Magneten und auf der anderen Seite (3) eine zweite Ausnehmung (5) mit einer zweiten Lagerstelle (7) für den zweiten Magneten aufweist, und dass auf der nicht von Fluid umströmten Seite (3) in der Druckplatte eine Tasche (8) ausgebildet ist, welche die erste (4) und die zweite Ausnehmung (5) zumindest in dem Bereich zur Aufnahme der Magneten umgibt und welche zur Aufnahme eines Abschirmelementes (10) dient.

2. Magnetkupplung nach Anspruch 1, **dadurch gekennzeichnet, dass** es sich bei den Magneten um Ringmagneten handelt, die in komplementären Ausnehmungen (4, 5) in der Druckplatte (1) aufgenommen sind, und dass das Abschirmelement von einem hohlzylinderförmigen Rohrstück (10) gebildet wird, das in einer komplementären Tasche (8) aufgenommen ist, die konzentrisch zu den beiden Ausnehmungen (4, 5) in der Druckplatte (1) angeordnet ist.

3. Magnetkupplung nach Anspruch 2, **dadurch gekennzeichnet, dass** das Abschirmelement einstückig ausgebildet ist.

4. Magnetkupplung nach einem der Ansprüche 2 und 3, **dadurch gekennzeichnet, dass** das Abschirmelement (10) aus einem Metall mit einem hohen Eisenanteil gebildet ist.

5. Magnetkupplung nach einem der vorhergehenden Ansprüche, **dadurch gekennzeichnet, dass** die Druckplatte (1) aus einem insbesondere glasfaserverstärkten Künststöffmaterial oder einem metallischen Werkstoff gebildet ist.

6. Wasserzähler mit einem Gehäuse, in dem eine Messeinrichtung, insbesondere ein Flügelrad, aufgenommen ist, :die mit einer Zähl- und/oder Anzeigeeinrichtung zusammenwirkt, **dadurch gekennzeichnet, dass** die Messeinrichtung durch eine Magnetkupplung nach einem der vorhergehenden Ansprüche mit der Zähl- und/oder Anzeigeeinrichtung gekoppelt ist.

## Claims

1. Magnetic clutch for flow meters, in particular water meters or the like, with a first and a second magnet rotatably mounted and separated by a single partition (1) around one side (2) of which a fluid flows, wherein the partition is represented in one piece by a pressure plate (1) featuring, on one side (2), a first recess (4) with a first mounting position (6) for the first magnet and on the other side (3), a second recess (5) with a second mounting position (7) for the second magnet, and wherein a pocket (8) is formed in the pressure plate on the side (3) around which there is no fluid flow, which surrounds the first (4) and the second (5) recess at least in the location area of the magnets and which acts as a location for a screening element (10).

2. Magnetic clutch according to claim 1, **characterised in that** the magnets are annular magnets located in complementary recesses (4, 5) in the pressure plate (1), and **in that** the screening element is represented by a hollow cylindrical pipe section (10) located in a complementary pocket (8) arranged to be concentric with the two recesses (4, 5) in the pressure plate (1).

3. Magnetic clutch according to claim 2, **characterised in that** the screening element is designed in one piece.

4. Magnetic clutch according to any of claims 2 and 3, **characterised in that** the screening element (10) is made of a metal with a high iron content.

5. Magnetic clutch according to any of the preceding claims, **characterised in that** the pressure plate (1) is made of an in particular glass fibre reinforced material or of a metallic material.

6. Water meter with a housing in which a measuring device, in particular a vane, acting together with a counter and/or indicator is located, **characterised in that** the measuring device is coupled to the counter and/or indicator by a magnetic clutch according to any of the preceding claims.

## Revendications

1. Accouplement magnétique pour débitmètres, en particulier pour compteurs d'eau ou similaires, avec un premier et un deuxième aimant qui sont pivotants et séparés l'un de l'autre par une cloison unique (1) contournée d'un côté (2) par un fluide de passage, la cloison étant formée de façon intégrale par un plateau de pression (1) qui présente d'un côté (2) un premier évidement (4) avec un premier point d'appui (6) pour le premier aimant et de l'autre côté (3) un deuxième évidement (5) avec un deuxième point d'appui (7) pour le deuxième aimant, et en ce que du côté (3) non contourné par le fluide du plateau de pression, une poche (8) est réalisée qui entoure le premier (4) et le deuxième évidement (5) au moins dans la zone destinée à recevoir les aimants et qui sert à recevoir un élément de blindage (10).

2. Accouplement magnétique selon la revendication 1, **caractérisé en ce que** les aimants sont des aimants toriques qui sont reçus dans des évidements complémentaires (4, 5) dans le plateau de pression (1), et **en ce que** l'élément de blindage est réalisé par une section de tuyau en forme de cylindre creux (10), qui est reçue dans une poche complémentaire (8) disposée dans le plateau de pression (1) de façon concentrique par rapport aux deux évidements (4, 5).

3. Accouplement magnétique selon la revendication 2, **caractérisé en ce que** l'élément de blindage est réalisé de façon intégrale.

4. Accouplement magnétique selon l'une quelconque des revendications 2 et 3, **caractérisé en ce que** l'élément de blindage (10) est formé à partir d'un métal avec une teneur en fer élevée.

5. Accouplement magnétique selon l'une quelconque des revendications précédentes, **caractérisé en ce que** le plateau de pression (1) est formé à partir d'un matériau plastique, en particulier renforcé fibre de verre, ou d'un matériau métallique.

6. Compteur d'eau avec un boîtier dans lequel un dispositif de mesure, en particulier une roue à palettes, est reçu qui coopère avec un dispositif de comptage et/ou d'affichage, **caractérisé en ce que** le dispositif de mesure est accouplé au dispositif de comptage et/ou d'affichage par un accouplement magnétique selon l'une quelconque des revendications précédentes.
